Europäisches Patentamt

(19) European Patent Office

Office européen des brevets

(11) Publication number: **0 210 681**
B1

# (12) EUROPEAN PATENT SPECIFICATION

(45) Date of publication of the patent specification:
04.04.90

(21) Application number: 86201138.4

(22) Date of filing: 27.06.86

(51) Int. Cl.⁴: **B01J 23/78**
// C07B31/00, C07B33/00

(54) **Bivalent metal-aluminate catalyst.**

(30) Priority: 31.07.85 GB 8519319

(43) Date of publication of application:
04.02.87 Bulletin 87/6

(45) Publication of the grant of the patent:
04.04.90 Bulletin 90/14

(84) Designated Contracting States:
AT BE CH DE FR GB IT LI LU NL SE

(56) References cited:
GB-A- 1 377 191
US-A- 3 791 993
US-A- 4 476 245

(73) Proprietor: SHELL INTERNATIONALE RESEARCH
MAATSCHAPPIJ B.V., Carel van Bylandtlaan 30,
NL-2596 HR Den Haag(NL)

(72) Inventor: Joustra, Annie Hendrika, Badhuisweg 3,
NL-1031 CM Amsterdam(NL)
Inventor: Mesters, Carolus Matthias Anna Maria,
Badhuisweg 3, NL-1031 CM Amsterdam(NL)

(74) Representative: Aalbers, Onno et al, P.O. Box 302,
NL-2501 CH The Hague(NL)

ACTORUM AG

**Description**

The present invention relates to a process of preparing a catalyst comprising a magnesium-aluminate spinel carrier in combination with copper, cobalt, compounds of copper or cobalt or mixtures thereof, wherein the general formula of a magnesium-aluminate spinel is $MgAl_2O_4$ or $MgO.Al_2O_3$.

British patent No. 1377 191 discloses a process of preparing a magnesium-aluminate spinel catalyst carrier, which process comprises precipitating from an aqueous solution of a soluble aluminium compound, $Al(NO_3)_3.6aq$, and a soluble magnesium compound, $Mg(NO_3)_2.6aq$, a precipitate. The precipitate is subsequently filtered, washed, dried, thermally treated and compressed to carriers.

A disadvantage of the known process is that the precipitate should be carefully washed to remove sodium and nitrate ions therefrom. A further disadvantage of the known process is that the precipitate has to be compressed to obtain carriers.

It is an object of the present invention to overcome the disadvantages.

To this end the process of preparing a catalyst including a bivalent metal-aluminate spinel catalyst carrier comprising the steps of

(a) preparing a mixture including a magnesium oxide precursor and an at least partly peptized mixture of an aluminium oxide precursor;

(b) kneading the mixture to obtain a dough;

(c) forming the dough to obtain carrier precursors, drying the carrier precursors at a temperature between 50 and 150 °C, and thermally treating the dried carrier precursors at a temperature between 500 and 1100 °C for at least 1 hour to obtain carriers; and

(d) impregnating the carriers at least one impregnating solution containing at least copper or cobalt, drying the impregnated carriers, and thermally treating the impregnated carriers at a temperature between 500 and 1100 °C for at least 1 hour to form a thermally treated catalyst, wherein the impregnating solution used is an ammoniacal solution of the metal.

In the specification and in the claim the expression "kneading" is used to refer to acts also referred to as "moulding" or "mulling".

Suitable aluminium oxide precursors are aluminium hydroxides, for example, boehmite or pseudo boehmite.

The expression "forming the dough" is used in the claim to refer to extruding the dough to form extrudates or a monolith as well as to pelletising the dough using a pelletising apparatus such as a Californian pellet mill.

The carrier can be impregnated with an excess of impregnating solution, or just with a sufficient amount of impregnating solution to allow filling up of the entire pore volume of the carrier. The latter technique, also referred to as pore volume impregnation, dry impregnation or incipient wetting technique, is preferred to obtain a good dispersion of the metal.

It was found that with the process according to the invention the aluminium oxide precursor was so finely dispersed in the at least partly peptized mixture that an intimate mixture of the aluminium oxide precursor and the magnesium oxide precursor could be obtained. Moreover, the use of an ammoniacal impregnating solution of the metal yields a homogeneous distribution of the catalytically active metal.

Suitably, to further increase the activity of the catalyst, the catalyst can be treated at a temperature between 600 and 1100 °C in a reducing environment. To obtain a satisfactory reduction of the metal oxides a high temperature is required. It was surprisingly found that reducing the catalyst at such a high temperature did not deteriorate the activity of the catalyst.

The at least partly peptized mixture of the aluminium oxide precursor can be prepared either in a basic environment or in an acidic environment. Therefore the at least partly peptized mixture can be prepared by adding to the aluminium oxide precursor either ammonia, or an organic acid such as acetic acid, or a mineral acid such as nitric acid.

Suitably the amount of magnesium oxide precursor present in the mixture of step (a) is such that the molar ratio of magnesium oxide to aluminium oxide is about 1.

In order to implement catalytic activity in the carrier, the mixture used in step (a) further includes a precursor of an oxide of a metal selected from the group zinc, manganese, iron, cobalt, nickel, copper and cadmium. In this way a carrier is prepared with two bivalent metals, magnesium and a metal (M) selected from the above group, the general formula of the corresponding spinel is $(Mg-M)Al_2O_4$ or $(MgO-MO)Al_2O_3$. The molar ratio of the bivalent metal M to magnesium is between 0.1 and 1, and the molar ratio of metal oxides (other than aluminium oxide) to aluminium oxide is about equal to 1. Such a spinel is sometimes referred to as mixed spinel.

The amount of copper in the catalyst can be up to 30% by weight of the catalyst and the amount of cobalt can be up to 24% by weight of the catalyst.

The catalyst according to the invention is suitable for reducing nitrogen oxides, and for oxidizing carbon monoxide and hydrocarbons. Therefore such a catalyst can be used to purify exhaust gas from an internal combustion engine, which exhaust gas includes constituents such as nitrogen oxides, carbon monoxide and hydrocarbons, which are considered to be harmful to the environment or which are capable of forming harmful products.

In the specification the term "nitrogen oxides" will be used to denote compounds of nitrogen and oxygen, such as nitrogen oxide, nitrogen dioxide or mixtures thereof.

To improve the activity of the catalyst for catalysing the oxidation of hydrocarbons, the pore size distribution of the carrier is suitably such that at least 0.2 ml/g of the pore volume is due to pores having a diameter larger than 200 nm and at least 0.4 ml/g of the pore volume is due to pores having a diameter between 10 and 200 nm. The pore size distribution is determined using Hg-intrusion porosimetry.

The catalyst catalyst according to the invention is suitable for catalysing oxidation and reduction reactions. Furthermore the catalyst has a prolonged service life and a high strength at high temperatures (about 800 °C) in the presence of air and/or water.

The invention will now be described by way of example in more detail with reference to the examples, wherein

Examples 1-5 relate to preparing a bivalent metal-aluminate spinel carrier according to the invention;

Example 6 relates to preparing a magnesium- and copper-aluminate spinel carrier prepared in an alternative manner;

Examples 7 and 8 relate to silicon oxide and aluminium oxide carriers respectively;

Examples 9 and 10 relate to preparing a catalyst impregnating solution;

Examples 11-21 relate to preparing a catalyst according to the invention; and

Examples 22 and 23 relate to preparing a catalyst using the impregnating solution according to the invention to impregnate silicon oxide and aluminium oxide carriers.

The following properties of the carriers in the form of extrudates have been included in Table 1:

(a) the specific area (SA) determined by using the BET method;

(b) the side crushing strength (SCS), being equal to the total force required to crush a plurality of extrudates, arranged axially one after the other in a row having a length of 30 cm, divided by 30 cm;

(c) the strength per particle (SPP), being equal to the total force required to crush a plurality of extrudates, arranged axially one after the other in a now having a length of 30 cm, divided by the number of extrudates; and

(d) the pore volume mercury (PVH$_g$) determined by mercury porosimmetry.

In Table 2, the same properties of the catalysts have been included.

In Table 3 have been included data relating to the catalytic activity of the catalysts.

Please note that " - " denotes that no data is available.

Example 1

A bivalent metal-aluminate spinel carrier comprising the bivalent metal magnesium was prepared as follows.

At first a partly peptized mixture of 500 g of an aluminium oxide precursor, to wit alumina substrate Versal 250 (trade name, ex Kaiser) containing on a dry base 370 g Al$_2$O$_3$, was prepared by mixing the alumina substrate Versal 250 for 5 minutes in 15.5 g glacial or pure acetic acid in a sigma blade mixer.

Subsequently 211.7 g Mg(OH)$_2$ containing on a dry base 146.3 g MgO was added to the partly peptized mixture, and 402 g H$_2$O was added thereafter. The mixture contained 3.6 mole Al$_2$O$_3$ and 3.6 mole MgO.

The mixture was kneaded for 1 hour, thereupon 60 g H$_2$O was added and kneading was extended for 5 minutes to obtain an extrudable dough. The extrudable dough was extruded to obtain strings having a diameter of 3.35 mm. The strings were dried at 120 °C for 12 hours, and broken into extrudates.

The extrudates were thermally treated in six different ways to produce the spinal carrier samples 1A, 1B, 1C, 1D, 1E and 1F, of which the termal treatment and the properties after treatment have been included in Table 1.

The X-ray patterns of the samples prepared according to the above process indicate that not all Mg(OH)$_2$ has reacted with the aluminium oxide precursor.

It was observed, however, that when, instead of Mg(OH)$_2$, a concentrated aqueous solution of Mg(NO$_3$).6aq, containing on a dry base 211.7 g MgO, was added to the partly peptized mixture, the X-ray pattern indicated a better interaction of the magnesium compound and the aluminium oxide precursor not showing any MgO.

Example 2

A mixed bivalent metal-aluminate spinel carrier, comprising the bivalent metal magnesium and copper as the secondary bivalent metal, was prepared as follows.

At first 88.3 g of an aluminium oxide precursor, to wit alumina substrate Versal 250 (trade name, ex Kaiser) containing on a dry base 66.2 g $Al_2O_3$, was mixed with 26.5 g $Mg(OH)_2$, containing on a dry base 18.3 g MgO, during 5 minutes in a sigma blade mixer.

Subsequently 82.1 g of an ammoniacal solution of copper carbonate, containing on a dry base 15.5 g CuO, was slowly added while mixing, to obtain a mixture comprising a partly peptized mixture of an aluminium oxide precursor and magnesium and copper compounds. The ammoniacal solution of copper carbonate is an solution containing 15% by weight of copper prepared according to Example 9. The mixture contained 0.65 mole $Al_2O_3$, 0.20 mole CuO and 0.45 mole MgO.

To obtain an extrudable dough, about 37 g $H_2O$ was added to the mixture and kneading was extended for 5 minutes. The dough was extruded to form strings having diameter 3,35 mm, which were dried at 120 °C for 12 hours and broken to form extrudates.

The extrudates were thermally treated in four different ways to produce spinel carrier samples 2A, 2B, 2C, and 2D, of which the thermal treatment and the properties after treatment have been included in Table 1.

Example 3

A mixed bivalent metal-aluminate spinel carrier, comprising the bivalent metal magnesium and copper as the secondary bivalent metal, was prepared as follows.

At first a partly peptized mixture of 500 g of an aluminium oxide precursor, to wit alumina substrate Versal 250 (trade name, ex Kaizer), containing on a dry base 370 g $Al_2O_3$, was prepared by mixing the aluminium oxide precursor for 5 minutes with 15.9 g glacial acetic acid in a sigma blade mixer.

Subsequently 103.6 g of an aqueous solution of $Cu(NO_3)_2.3aq$, containing on a dry base 28.9 g CuO, was slowly added in 5 minutes to the partly peptized mixture, and thereupon 190.5 g $Mg(OH)_2$, containing on a dry base 132 g MgO, was added thereto. The mixture contained 3.6 mole $Al_2O_3$, 0.36 mole CuO and 3.3 mole MgO. The mixture was kneaded during 5 minutes after which 267 g $H_2O$ was added, and kneading was extended for 45 minutes to form an extrudable dough.

The extrudable dough was extruded to obtain strings having a diameter of 3.35 mm. The strings were dried at 120 °C for 48 hours, and broken into extrudates. The extrudates were thermally treated in two different ways to produce the spinel carrier samples 3A and 3B, of which the thermal treatment and the properties after treatment have been included in Table 1.

Example 4

A mixed bivalent metal-aluminate spinel carrier, comprising the bivalent metal magnesium and cobalt as the secondary bivalent metal, was prepared as follows.

At first a partly peptized mixture of 500 g of an aluminium oxide precursor, to wit alumina substrate Versal 250 (trade name, ex Kaiser) containing on a dry base 370 g $Al_2O_3$, in 15.8 g glacial acetic acid was prepared, and mixed in a sigma blade mixer for 5 minutes.

Subsequently an aqueous solution of 104.6 g $Co(NO_3)_2.6aq$, containing on a dry base 26.9 g CoO, in 136.0 g $H_2O$ was added slowly to the partly peptized mixture and mixing was carried out for 5 minutes. Thereupon 190.5 g $Mg(OH)_2$, containing on a dry base 131.7 g MgO, and 258.0 g $H_2O$ were added thereto and the mixture was kneaded for 45 minutes. The mixture contained 3.6 mole $Al_2O_3$, 0.36 mole CoO and 3.3 mole MgO.

To obtain an extrudable dough 13.5 g $H_2O$ was added and kneading was carried out for another 5 minutes. The mixture contained 3.6 mole $Al_2O_3$, 0.36 mole CoO and 3.3 mole MgO.

The extrudable dough was extruded to obtain strings having a diameter of 3.35 mm. The strings were dried at 120 °C for 12 hours, and broken into extrudates.

The extrudates were thermally treacted in three different ways to produce the spinel carrier samples 4A, 4B and 4C of which the thermal treatment and the properties after treatment, have been included in Table 1.

Example 5

A magnesium-aluminate spinel carrier having a suitable pore distribution was prepared as follows.

At first 990 g of an aluminium oxide precursor, to wit alumina substrate Versal 250 (trade name, ex Kaiser) containing on a dry base 750 g $Al_2O_3$ was mixed for 5 minutes with 22.5 g glacial acetic acid in a sigma blade mixer to obtain a partly peptized mixture.

Subsequently 750 g alumina, calcined at 900 °C, was added thereto and 929 g $Mg(OH)_2$ containing 31.9 %w MgO on a dry base. Thereafter 148.5 g water was added thereto.

The mixture was kneaded for 45 minutes to obtain an extrudable dough. The dough was extruded to obtain strings having a diameter of 3.35 mm. The strings were at 120 °C for 12 hours and treated for 1 hour at 800 °C.

The pore size distribution, determined using Hg-intrusion porosimetry after the thermal treatment, is 0.25 ml/g of the pore volume is due to pores having a pore diameter larger than 200 nm and 0.46 ml/g is due to pores having a diameter between 10 and 200 nm, the total pore volume being 0.81 ml/g.

## Example 6

A mixed bivalent metal-aluminate spinel carrier comprising the bivalent metal magnesium and copper as the secondary bivalents metal, was prepared in an alternative manner as follows.

At first 500 g alumina substrate Versal 250 (trade name, ex Kaiser), containing on a dry base 370 g $Al_2O_3$, was mixed in a sigma blade mixer with 150 g $Mg(OH)_2$, containing on a dry base 102.4 g MgO, for 5 minutes, after which 14.4 g glacial acetic acid was added thereto and 450 g $H_2O$. The mixture was kneaded for 1 hour and extrudated to obtain strings having a diameter of 3.35 mm. The strings were dried at 120 °C for 10 hours, and broken into extrudates, which were thermally heated for 1 hour at 500 °C in air.

Subsequently 10 g of the extrudates were impregnated with 9.5 g of an ammoniacal solution of copper containing 11.6% by weight of copper and prepared along the lines as set out in Example 9. The impregnated extrudates were dried at 80 °C for 10 hours and thermally heated for 1 hour at 500 °C in air. Subsequently the extrudates were impregnated with 3.1 g of the above ammoniacal solution containing 11.6 % by weight of copper diluted with 3.63 g of a 3% by weight $NH_3$ solution.

After impregnation the extrudates were dried at 80 °C for 10 hours and thermally heated in two ways to produce spinel carrier samples 6A and 6B, of which the thermal treatment and the properties have been included in Table 1.

## Example 7

Spherical carries comprising silicon oxide (HT16), trade name, ex Shell) were thermally heated so as to obtain carrier sample 7, of which the thermal treatment and the properties have been included in Table 1.

## Example 8

Extrudates containing aluminium oxide (AK 200, trade name, ex Shell) were thermally treated in five different ways to obtain carrier samples 8A, 8B, 8C, 8D and 8E, of which the thermal treatment and the properties have been included in Table 1.

## Example 9

An ammoniacal solution of copper containing 13.5% by weight of copper was prepared as follows.

To a mixture of 20.0 g $H_2O$ and 62.7 g $NH_4OH$ (containing 25.4% by weight of $NH_3$) was added 12.0 g ammonium carbonate (containing 30-33% by weight of $NH_3$). The ammonium carbonate was dissolved while stirring and heating the solution slightly to a temperature of 25 °C to obtain a clear basic ammonium carbonate solution.

To this basic ammonium carbonate solution was added 30.0 g copper carbonate (ex Pharmacie Centrale de France) containing 16.9 g copper. An exothermic reaction was observed and the temperature of the mixture was allowed to rise to about 45 to 50 °C. After 10 minutes a clear dark blue solution containing 13.5% by weight of copper was obtained.

The impregnation solution can as well be prepared by dissolving a metal hydroxide in the ammonium carbonate solution.

## Example 10

An ammoniacal solution of cobalt containing 8.22% by weight of cobalt was prepared as follows.

To a mixture of 6.2 g $H_2O$ and 51.0 g $NH_4OH$ (containing 25.4% by weight of $NH_3$) was added 40.0 g ammonium carbonate (containing 30-33% by weight of $NH_3$). The ammonium carbonate was dissolved while stirring and heating the solution slightly to a temperature of 25 °C to obtain a clear basic ammonium carbonate solution. To this basic ammonium carbonate solution was added 17.8 g cobalt carbonate (ex Pharmacie Centrale de France) containing 9.4 g cobalt. An exothermic reaction was observed, and the temperature was allowed to rise to about 45-50 °C. After 10 minutes a clear dark purple solution containing 8,22% by weight of cobalt was obtained.

## Example 11

A catalyst comprising a magnesium-aluminate spinel in combination with copper was prepared as follows.

At first, 25.2 g of the magnesium-aluminate spinel carrier sample 1B was impregnated with 22.9 g of the ammoniacal solution of copper containing 13.5% by weight of copper of Example 9. After impregnation a part of the catalyst was dried at 80 °C for 12 hours and thermally treated for 1 hour at 500 °C in air. An other part of the catalyst was thermally treated at 800 °C, the properties thereof have been included in Table 2.

The amount of copper was 10.7% by weight of the catalyst.

Example 12

A catalyst comprising a magnesium-aluminate spinel in combinations with copper and cobalt was prepared as follows.

Subsequently 11.1 g of the catalyst of Example 11, thermally treated at 500 °C, was impregnated with 8.7 g of the ammoniacal solution of cobalt of Example 10. After impregnation the catalyst was dried at 80 °C for 12 hours.

The dried catalyst was thermally treated in two ways to produce samples 12A and 12B, of which the thermal treatment and the properties have been included in Table 2.

The catalyst contained 9.9% by weight of copper and 5.9% by weight of cobalt.

Example 13

A catalyst comprising a mixed copper- and magnesium-aluminate spinel in combination with 10.6% by weight of copper was prepared as follows.

At first, 20 g of the mixed copper- and magnesium-aluminate spinel carrier sample 2B was impregnated with 17.9 g of an ammoniacal solution of copper containing 13.5% by weight of copper of Example 9. After impregnation the catalyst was dried at 80 °C for 12 hours, and a part of the catalyst was thermally treated at 500 °C for 1 hour in air. An other part of the catalyst was thermally treated at 800 °C, the properties thereof have been included in Table 2.

The amount of copper added to the catalyst equals to 10.6% by weight of the catalyst.

Example 14

A catalyst comprising a mixed copper- and magnesium-aluminate spinel in combination with copper and cobalt was prepared as follows.

Subsequently 10.0 g of the catalyst of Example 13, thermally treated at 500 °C, was impregnated with 7.75 g of the ammoniacal solution of cobalt of Example 10. After impregnation the sample was dried at 80 °C for 12 hours. The dried catalyst was thermally treated in two ways to produce samples 14A and 14B, of which the termal treatment and the properties have been included in Table 2.

The amount of copper added to the catalyst equals 9.9% by weight of the catalyst, and the amount of cobalt equalts 5.9% by weight of catalyst.

Example 15

A catalyst comprising a mixed cobalt- and magnesium-aluminate spinel in combination with 6% by weight of copper was prepared as follows.

At first 92.5 g of the mixed cobalt- and magnesium-aluminate spinel carrier sample 4A was impregnated with an impregnating solution comprising 66.7 g of an ammonical solution of copper containing 9% by weight of copper prepared along the lines as set out in Example 9 diluted with 4 g $H_2O$. After impregnation the catalyst was dried at 80 °C for 12 hours and thermally treated at 500 °C for an hour in air.

The amount of copper added to the catalyst is 6% by weight of the catalyst.

Example 16

A catalyst comprising a mixed cobalt- and magnesium-aluminate spinel in combination with 12% by weight of copper was prepared as follows.

At first 80 g of the catalyst of Example 15 was impregnated with an impregnating solution comprising 57.7 g of the ammoniacal solution of copper mentioned in Example 9 diluted with 1.2 g $H_2O$. After impregnation the catalyst was dried at 80 °C for 12 hours and thermally treated at 500 °C for 1 hour in air.

The amount of copper added to the catalyst is 12% by weight of the catalyst.

Example 17

A catalyst comprising a mixed cobalt- and magnesium-aluminate spinel in combination with 18% by weight of copper was prepared as follows.

At first 60 g of the catalyst of Example 16 was impregnated with an impregnating solution comprising 43.22 g of the ammoniacal solution of copper mentioned in Example 9. After impregnation the catalyst was dried at 80 °C for 12 hours and thermally treated at 500 °C for 1 hour in air.

The amount of copper added to the catalyst is 18% by weight of the catalyst.

Example 18

A catalyst comprising a mixed cobalt- and magnesium-aluminate spinel in combination with 24% by weight of copper was prepared as follows.

At first 40 g of the catalyst of Example 17 was impregnated with an impregnating solution comprising 27.8 g of the ammoniacal solution of copper mentioned in Example 9. After impregnating the catalyst was dried at 80 °C for 12 hours and thermally treated at 500 °C for 1 hour in air.

The amount of copper added to the catalyst is 24% by weight of the catalyst.

Example 19

A catalyst comprising a mixed cobalt- and magnesium-aluminate spinel in combination with 8% by weight of cobalt was prepared as follows.

At first 94.9 g of the mixed cobalt- and magnesium-aluminate spinel carrier 4A was impregnated with an impregnating solution comprising 48.7 g of the ammoniacal solution of cobalt containing 8.22% by weight of cobalt of Example 10 diluted with 27.5 g $H_2O$. After impregnation the catalyst was dried at 80 °C for 12 hours and thermally treated at 500 °C for 1 hour.

The amount of cobalt added to the catalyst is 4% by weight of the catalyst.

Subsequently 80 g of this catalyst was impregnated with an impregnating solution comprising 42.2 g of the ammoniacal solution of cobalt of Example 10 diluted with 20 g $H_2O$. After impregnation the catalyst was dried at 80 °C for 12 hours and thermally treated at 500 °C for 1 hour.

The amount of cobalt odded to the catalyst is 8% by weight of the catalyst.

Example 20

A catalyst comprising a mixed cobalt- and magnesium-aluminate spinel in combination with 16% by weight of cobalt was prepared as follows.

At first 60 g of the catalyst of Example 19 containing 8% by weight of cobalt was impregnated with an impregnating solution comprising 31.5 g of the ammoniacal solution of cobalt of Example 10 diluted with 13.8 g $H_2O$. After impregnation the catalyst was dried at 80 °C for 12 hours and thermally treated at 500 °C for 1 hour.

The amount of cobalt added to the catalyst is 12% by weight of the catalyst.

Subsequently 40 g of this catalyst was impregnated with an impregnating solution comprising 20.6 g of the ammonical solution of cobalt of Example 10 diluted with 9.5 g $H_2O$. After impregnation the catalyst was dried at 80 °C for 12 hours and thermally treated at 500 °C for 1 hour.

The amount of cobalt added to the catalyst is 16% by weight of the catalyst.

Example 21

A catalyst comprising a mixed cobalt- and magnesium-aluminate spinel in combination with 24% by weight of cobalt was prepared as follows.

At first 30 g of the catalyst containing 16% by weight of cobalt of Example 20 was impregnated with an impregnating solution comprising 15.45 g of the ammoniacal solution of cobalt of Example 10 diluted with 6.5 g $H_2O$. After impregnation the catalyst was dried at 80 °C for 12 hours and thermally treated at 500 °C for 1 hour.

The amount of cobalt added to the catalyst is 20% by weight of the catalyst.

Subsequently 20 g of this catalyst was impregnated with an impregnating solution comprising 10.2 g of the ammoniacal solution of cobalt of Example 10 diluted with 3.8 g $H_2O$. After impregnation the catalyst was dried at 80 °C for 12 hours and thermally treated at 500 °C for 1 hour.

The amount of cobalt odded to the catalyst is 24% by weight of the catalyst.

Example 22

A sample of a catalyst comprising a silicon dioxide (HT16, trade name, ex Shell) and 13.8% by weight of copper was prepared by impregnating 21 g silicon dioxide with 27.2 g of an ammoniacal solution of copper containing 13.0% by weight of copper and prepared along the lines as set out in Example 9. After impregnation, the catalyst sample was dried at 80 °C for 10 hours and thermally treated. The properties of the sample and the thermal treatment have been included in Table 2.

Example 23

A catalyst sample comprising aluminium oxide (AK 200, trade name, ex Shell) and 9.3% by weight of copper was prepared by impregnating 22.5 g aluminium oxide with 15.5 g of an ammoniacal solution of copper containing 15.1% by weight of copper and prepared along the lines set out in Example 9. After impregnation the sample was dried at 80 °C for 10 hours and thermally treated in two ways resulting in samples 23A and 23B. The properties of the samples and the thermal treatment are included in Table 2.

The catalysts as prepared in Examples 11 to 23 were tested to determine the activity of the catalysts to reduce nitrogen oxide, to oxidize carbon monoxide and to oxidize propane.

The tests were carried out in a vertical tubular quartz reactor having length of 5.6 cm and an internal diameter of 1.4 cm. In order to allow temperature measurements in the quartz reactor, an internal cylindrical thermowell, having an outer diameter of 0.5 cm, was arranged coaxially in the reactor. An annular reactor space was defined between the inner surface of the wall of the quartz reactor and the outer surface of the wall of the thermowell, having a cross sectional area of 1.3 cm$^2$.

In the tests a catalyst bed, having a volume of about 5.2 ml was used comprising 0.100 g of catalyst, crushed to a size smaller than 80 mesh, and subsequently mixed with 5 ml silicon oxide fines to obtain during testing a good distribution of the gas mixture over the annular reactor space. The catalyst bed was supported on a glass filter, and on the top of the catalyst a layer of silicon oxide particles (10-30 mesh) was arranged to improve heat exchange between a gas mixture passing through the reactor and the reactor wall. In the thermowell, a thermocouple was arranged at about ¼ of the height of the bed.

During the tests a gas mixture was passed downwards through the reactor with a velocity between 100 and 120 ml/min, the volume of the gas mixture being determined at room temperature and at ambients pressure. This velocity range corresponds to a gas hourly space velocity of about 36 000 l/l/hour. The composition of the effluents was contineously monitored by on-line mass-spectroscopy.

The activity of the catalysts were determined for three reactions:

(a) reduction of nitroge oxide in the presence of carbon monoxide according to the reaction $2NO + 2CO \rightarrow N_2 + 2CO_2$, wherein the gaseous mixture comprised 1 vol.% NO and 2 vol.% CO in He;

(b) oxidation of carbon monoxide in the presence of oxygen according to the reactio $2CO + O_2 \rightarrow 2CO_2$, wherein the gaseous mixture comprised 2 vol.% CO and 2 vol.% $O_2$ in He;

and

(c) oxidation of propane in the presenve of oxygen according to the reaction $C_3H_8 + O_2 \rightarrow 3CO_2 + 4H_2O$, wherein the gaseous mixture comprised 2 vol.% $C_3H_8$ and 3 vol.% $O_2$ in He.

The conversion has been determined as a function of the temperature of the catalyst bed, which temperature was raised during the tests from room temperature with 5 °C/min.

To allow a comparison of the tests, the activity of a catalyst is expressed as the light-off temperature of a reactant, which is the temperature required to convert 50% of the reactants, thus T 50% NO is the temperature to reduce 50% of NO, T 50% CO is the temperature required to oxidize 50% of CO, and T 50% $C_3H_8$ is the temperature to oxidize 50% of $C_3H_8$.

In Table 3 the light-off temperatures for the catalysts of Examples 11, 12, 13, 14, 15, 16, 17, 18, 19, 20, 21, 22 and 23 have been included. The catalyst samples tested are either fresh products as obtained directly after preparation, or the catalysts were thermally treated prior to the test. The thermal treatment comprises either treatment a primary reduction for 16 hours at elevated temperature, or a treatment of 100 hours in air at 1000 °C, or a secondary reduction for 16 hours at elevated temperature, or combinations thereof.

More over in Table 3, the light-off temperatures of the carrier of Example 6 as such have been included.

The lower the light-off temperature (T 50%) for a conversion is, the higher is the activity of the catalyst for that conversion.

## Table 1

Properties of bivalent metal-aluminate spinel carriers, please note that if not otherwise indicated, the thermal treatment is in air.

| carrier sample | Composition | thermal treatment | SA $M^2/g$ | SCS $N/cm$ | SPP kg | PVHg |
|---|---|---|---|---|---|---|
| 1A | $MgAl_2O_4$ | 1 hour, 500 °C | – | 104 | 6.5 | 0.62 |
| 1B | " | 1 hour, 800 °C | 169 | 91 | 6 | 0.72 |
| 1C | " | 1 hour, 1100 °C | 59 | 222 | 15 | 0.44 |
| 1D | " | 100 hours, 1100 °C | 15 | 264 | 16.5 | 0.28 |
| 1E | " | 120 hours, 800 °C 15 %vol $H_2O$ in $N_2$ | 88 | 98 | 7 | 0.76 |
| 1F | " | 120 hours, 800 °C 15 %vol $H_2O$ in air | 49 | 187 | 11 | 0.62 |
| 2A | $(Mg-Cu)Al_2O_4$ | 1 hour, 500 °C | 238 | – | – | 0.54 |
| 2B | " | 1 hour, 800 °C | 119 | – | – | – |
| 2C | " | 1 hour, 1000 °C | 25 | – | – | 0.49 |
| 2D | " | 120 hours, 800 °C 15 %vol $H_2O$ in air | 37 | – | – | 0.45 |
| 3A | $(Mg-Cu)Al_2O_4$ | 1 hour, 800 °C | 140 | – | – | 0.79 |
| 3B | " | 1 hour, 1100 °C | 44 | 222 | 15 | 0.44 |
| 4A | $(Mg-Co)Al_2O_4$ | 1 hour, 800 °C | 151 | – | – | 0.71 |
| 4B | " | 1 hour, 1100 °C | 46 | 190 | 12 | 0.57 |
| 4C | " | 100 hours, 1100 °C | 16 | – | – | – |

## Table 1 (cont'd)

| sample | carrier Composition | thermal treatment | SA $M^2/g$ | SCS N/cm | SPP kg | PVHg |
|---|---|---|---|---|---|---|
| 6A | (Mg–Cu) $Al_2O_4$ | 1 hour, 500 °C | – | 235 | 14 | – |
| 6B | " | 1 hour, 800 °C | – | 157 | 9 | – |
| 7 | $SiO_2$ | 1 hour, 1000 °C | 134 | – | – | 0.54 |
| 8A | $Al_2O_3$ | 1 hour, 500 °C | 300 | 69 | 4 | 0.69 |
| 8B | " | 1 hour, 800 °C | – | 52 | 3 | – |
| 8C | " | 1 hour, 1100 °C | 77 | 65 | 4 | 0.70 |
| 8D | " | 24 hours, 1100 °C | 16 | 64 | 4 | 0.51 |
| 8E | " | 100 hours, 1100 °C | 15 | – | – | – |

## Table 2

Properties of thermally treated catalysts,
please note that the thermal treatment is in air.

| sample | carrier Composition | carrier sample | thermal treatment | SA M²/g | SCS N/cm | SPP kg | PVHg |
|--------|---------------------|----------------|-------------------|---------|----------|--------|------|
| 11 | Cu on MgAl$_2$O$_4$ | 1B | 1 hour, 800 °C | 101 | – | – | – |
| 12A | Cu/Co on MgAl$_2$O$_4$ | 1B | 1 hour, 500 °C | 138 | – | – | 0.55 |
| 12B | " | " | 1 hour, 780 °C | 92 | 93 | 5 | – |
| 13 | Cu on (Mg–Cu) Al$_2$O$_4$ | 2B | 1 hour, 500°C | 75 | – | – | – |
| 14 A | Cu/Co on (Mg–Cu) Al$_2$O$_4$ | 2B | 1 hour, 500 °C | 107 | – | – | – |
| 14 B | " | " | 1 hour, 800 °C | 64 | – | – | – |
| 22 | Cu on SiO$_2$ | – | 100 hour, 1000 °C | 12 | – | – | – |
| 23A | Cu on Al$_2$O$_3$ | – | 1 hour, 800 °C | 50 | – | – | – |
| 23B | " | – | 1 hour, 1000 °C | 6 | – | – | – |

## Table 3

### Catalytic activity of catalysts

| catalyst sample | catalyst composition | thermal treatment | | | T 50% (°C) | | |
|---|---|---|---|---|---|---|---|
| | | reduction (°C) | 1000°C in air | reduction (°C) | NO | CO | $C_3H_3$ |
| 11 | Cu on $MgAl_2O_4$ | 450 | no | no | 201 | 187 | 458 |
| | | no | yes | no | – | – | 548 |
| | | no | yes | 450 | – | – | 453 |
| 12B | Cu/Co on $MgAl_2O_4$ | 450 | no | no | 217 | 181 | 449 |
| | | 800 | no | no | – | – | 268 |
| | | no | yes | no | – | – | 541 |
| | | no | yes | 450 | 247 | – | 452 |
| | | 800 | yes | no | – | – | 402 |
| 6A | $(Mg-Cu)Al_2O_4$ carrier | no | no | no | 228 | 229 | – |
| 6B | " | no | no | no | 330 | 227 | – |
| 13 | Cu on $(Mg-Cu)Al_2O_4$ | 450 | no | no | 179 | 170 | 448 |
| | | no | yes | no | 328 | – | 528 |
| | | no | yes | 450 | – | – | 462 |
| 14B | Cu/Co on $(Mg-Cu)Al_2O_4$ | no | no | no | – | – | 451 |
| | | 450 | no | no | 202 | 171 | 391 |
| | | no | yes | 450 | 274 | 217 | 511 |

Table 3 (cont'd)

| catalyst sample | catalyst composition | thermal treatment | | | T 50% (°C) | | |
|---|---|---|---|---|---|---|---|
| | | reduction (°C) | 1000°C in air | reduction (°C) | NO | CO | $C_3H_3$ |
| 15 | Cu on (Mg-Co)$Al_2O_4$ | no | no | no | – | – | 452 |
| 16 | " | no | no | no | – | – | 421 |
| 17 | " | no | no | no | – | – | 447 |
| 17 | " | 800 | no | no | – | – | 325 |
| 18 | " | no | no | no | – | – | 432 |
| 18 | " | no | yes | no | – | – | 521 |
| 18 | " | no | yes | 600 | – | – | 434 |
| 19 | Co on (Mg-Co)$Al_2O_4$ | no | no | no | – | – | 515 |
| 20 | " | no | no | no | – | – | 490 |
| 20 | " | 450 | no | no | – | – | 460 |
| 20 | " | 800 | no | no | – | – | 250 |
| 21 | " | no | no | no | – | – | 455 |
| 21 | " | no | yes | no | – | – | 475 |
| 22 | Cu on $SiO_2$ | 450 | no | no | 202 | 189 | 402 |
| 22 | " | no | yes | 450 | 448 | 276 | 500 |
| 23 | Cu on $Al_2O_3$ | 450 | no | no | 252 | – | – |
| 23 | " | – | yes | 450 | 451 | – | – |

**Claims**

1. Process of preparing a catalyst including a bivalent metal-aluminate spinel catalyst carrier comprising the steps of
(a) preparing a mixture including a magnesium oxide precursor and an at least partly peptized mixture of an aluminium oxide precursor;
(b) kneading the mixture to obtain a dough;
(c) forming the dough to obtain carrier precursors, drying the carrier precursors at a temperature between 50 and 150°C, and thermally treating the dried carrier precursors at a temperature between 500 and 1100°C for at least 1 hour to obtain carriers; and
(d) impregnating the carriers with at least one impregnating solution containing at least copper or cobalt, drying the impregnated carriers, and thermally treating the impregnated carriers at a temperature between 500 and 1100°C for at least 1 hour to form a thermally treated catalyst, wherein the impregnating solution used is an ammoniacal solution of the metal.

2. Process as claimed in claim 1, further comprising treating the thermally treated catalyst at a temperature between 600 and 1100°C in a reducing environment.

3. Process as claimed in claim 1 or 2, wherein the at least partly peptized mixutre of the aluminium precursor is prepared by adding to the aluminium oxide precursor either ammonia, or an organic acid, such as acetic acid, or a mineral acid, such as nitric acid.

4. Process as claimed in any one of the claims 1–3, wherein the mixture used in step (a) further includes a precursor of an oxide of a metal selected from the group zinc, manganese, iron, cobalt, nickel, copper and cadmium.

5. Process as claimed in claim 4, wherein the molar ratio of metal to magnesium is between 0.1 and 1.0.

**Patentansprüche**

1. Verfahren zur Herstellung eines Katalysators, der einen Katalysatorträger aus zweiwertigem Metall-Aluminat-Spinell aufweist, welches Verfahren die folgenden Stufen umfaßt:
(a) Bereiten eines Gemisches, das einen Magnesiumoxid-Vorläufer und ein wenigstens teilweise peptisiertes Gemisch eines Aluminiumoxid-Vorläufers einschließt;
(b) Kneten des Gemisches zur Ausbildung eines Teiges;
(c) Verformen des Teiges zur Ausbildung von Trägervorläufern, Trocknen der Trägervorläufer bei einer Temperatur zwischen 50 und 150°C und thermisches Behandeln der getrockneten Trägervorläufer bei der Temperatur zwischen 500 und 1.100°C während wenigstens einer Stunde zur Ausbildung von Trägern; und
(d) Imprägnieren der Träger mit wenigstens einer Imprägnierlösung, die zumindest Kupfer oder Kobalt enthält, Trocknen der imprägnierten Träger und thermisches Behandeln der imprägnierten Träger bei einer Temperatur zwischen 500 und 1.100°C während wenigstens einer Stunde zur Ausbildung eines thermisch behandelten Katalysators, wobei die verwendete Imprägnierlösung eine ammoniakalische Lösung des Metalles ist.

2. Verfahren nach Anspruch 1, welches weiterhin ein Behandeln des thermisch behandelten Katalysators bei einer Temperatur zwischen 600 und 1.100°C in einer reduzierenden Umgebung umfaßt.

3. Verfahren nach Anspruch 1 oder 2, worin das wenigstens teilweise peptisierte Gemisch des Aluminiumoxid-Vorläufers durch Zusetzen zu dem Aluminiumoxid-Vorläufer von entweder Ammoniak oder von einer organischen Säure, wie Essigsäure, oder einer Mineralsäure, wie Salpetersäure, hergestellt wird.

4. Verfahren nach einem der Ansprüche 1 bis 3, worin das in Stufe (a) verwendete Gemisch weiterhin einen Vorläufer eines Oxids eines Metalles, ausgewählt aus der Zink, Mangan, Eisen, Kobalt, Nickel, Kupfer und Kadmium umfassenden Gruppe, einschließt.

5. Verfahren nach Anspruch 4, worin das Molverhältnis von Metall zu Magnesium von 0,1 bis 1,0 beträgt.

**Revendications**

1. Procédé de préparation d'un catalyseur contenant un support de catalyseur spinelle d'aluminate de métal divalent comprenant les étapes qui consistent à
(a) préparer un mélange contenant un précurseur d'oxyde de magnésuim et un mélange au moins partiellement peptisé d'un précurseur d'oxyde d'aluminium;
(b) pétrir le mélange pour obtenir une pâte;
(c) former la pâte pour obtenir des précurseurs de support, sécher les précurseurs de support à une température comprise entre 50 et 150°C et traiter thermiquement les précurseurs de support séchés à une témperature comprise entre 500 et 1100°C pendant au moins 1 heure pour obtenir des supports; et
(d) imprégner les supports d'au moins une solution d'imprégnation contenant au moins du cuivre ou du cobalt, sécher les supports imprégnés et traiter thermiquement les supports imprégnés à une température comprise entre 500 et 1100°C pendant au moins 1 heure, pour former un catalyseur traité thermiquement, dans lequel la solution d'imprégnation utilisée est une solution ammoniacale du métal.

2. Procédé selon la revendication 1, comprenant en outre le traitement du catalyseur traité thermiquement à une température comprise entre 600 et 1100°C dans un environnement réducteur.

3. Procédé selon la revendication 1 ou 2, dans lequel on prépare le mélange au moins partiellement peptisé du précurseur d'aluminium en ajoutant au précurseur d'oxyde d'aluminium ou bien de l'ammoniac, ou bien un acide organique comme l'acide acétique, ou envore un acide minéral comme l'acide nitrique.

4. Procédé selon l'une quelconque des revendications 1–3, dans lequel le mélange utilisé dans l'étape (a) renferme en outre un précurseur d'un oxyde d'un métal choisi dans le groupe des métaux zinc, manganèse, fer, cobalt nickel, cuivre et cadium.

5. Procédé selon la revendication 4, dans lequel le rapport molaire du métal au magnésium est compris entre 0,1 et 1,0.